# EUROPEAN PATENT SPECIFICATION

(11) **EP 3 446 974 B1**
(45) Date of publication and mention of the grant of the patent: **06.11.2024**
(21) Application number: 18179512.1
(22) Date of filing: 25.06.2018
(51) Int. Cl.: B64C 39/00, B64C 39/02

(54) **UNMANNED AERIAL VEHICLE**
UNBEMANNTES FLUGGERÄT
VÉHICULE AÉRIEN SANS PILOTE

(30) Priority: 23.08.2017 US 201715684814
(43) Date of publication of application: 27.02.2019
(73) Proprietor: Unusual Machines, Inc., Orlando FL 32811 (US)
(72) Inventor: Meugnier, Jerome, George Town, Grand Cayman KY1-1003 (KY); French, Gregory, George Town, Grand Cayman KY1-1003 (KY); Evans, Allan, George Town, Grand Cayman KY1-1003 (KY)
(74) Representative: Eisenführ Speiser

(56) References cited:
- EP-A1- 3 375 711
- WO-A1-2016/013933
- WO-A1-2018/039365
- WO-A1-2018/157833
- CN-A- 107 444 608
- CN-U- 204 250 368
- CN-U- 205 469 856
- US-A1- 2016 122 015
- US-S- D 848 383

## Description

### SUMMARY

Disclosed herein are embodiments of unmanned aerial vehicles having vertically-mounted printed circuit boards. The invention proposes an unmanned aerial vehicle according to claim 1. Further optional features are mentioned in the dependent claims 2-14.

In some embodiments, the plane in which the surface of the PCB lies is a first plane, and the surface of the PCB does not intersect any projection, in a second plane, of a rotation circumference of any propeller assembly of the unmanned aerial vehicle, the second plane being orthogonal to the axis of rotation of the propeller assembly.

In some embodiments, at least a portion of the surface of the PCB is exposed. In some embodiments, at least a portion of the surface of the PCB is covered by a coating, which may be transparent or translucent.

In some embodiments, the PCB has a nonrectangular shape. The nonrectangular shape may be any shape, such as, for example, the shape of an animal (e.g., a shark, a whale, a dog, a cat, a tiger, a fish, etc.). The PCB shape may provide an interesting design element to the UAV.

According to the claimed invention, the PCB comprises a mechanical feature configured to engage with a peripheral or a subassembly comprising the peripheral. For example, the mechanical feature may be a cutout in the PCB. In some such embodiments, the peripheral or peripheral subassembly may be slidably engaged in the cutout. In embodiments in which the peripheral or peripheral subassembly is slidably engaged in the cutout, the peripheral may be electrically coupled (e.g., connected) to the PCB. In some embodiments, the peripheral or peripheral subassembly is soldered to the PCB. The peripheral may be, for example, a camera.

In some embodiments, the UAV weighs less than about 1 kilogram (kg). For example, in some embodiments, the UAV is a micro-drone weighing no more than approximately 250 grams (g).

Some non claimed embodiments disclose a kit for a UAV that, after being assembled, has a yaw axis, a pitch axis, and a roll axis. The kit comprises four propeller assemblies, a base assembly configured to be coupled to each of the four propeller assemblies, and a PCB configured to be coupled to the base assembly. Each of the four propeller assemblies is configured to rotate about a respective one of a plurality of axes of rotation when the UAV has been assembled. The kit is configured such that when the PCB is coupled to the base assembly, a surface of the PCB lies in a plane defined by the yaw axis and the roll axis, and no portion of the PCB intersects any axis of rotation of any of the four propeller assemblies.

In some non claimed embodiments, the kit further comprises a plurality of motors already coupled to, or configured to be coupled to, the four propeller assemblies. In some embodiments, the base assembly comprises a plurality of motors that, after the UAV has been assembled, are coupled to the four propeller assemblies.

In some non claimed embodiments, the PCB of the kit has a nonrectangular shape. The nonrectangular shape may be any shape, such as, for example, the shape of an animal (e.g., a shark, a whale, a dog, a cat, a tiger, a fish, etc.).

In some non claimed embodiments, at least a portion of the surface of the PCB of the kit is exposed. In some embodiments, at least a portion of the surface of the PCB is covered by a coating, which may be transparent or translucent.

In some non claimed embodiments, the PCB of the kit comprises a mechanical feature configured to engage with a peripheral or a peripheral subassembly. For example, the mechanical feature may be a cutout in the PCB. In some such embodiments, the kit includes the peripheral, which may be, for example, a camera. In some embodiments that include a camera, the kit further comprises a protective ring coupled to or configured to be coupled to the camera.

In some non claimed embodiments, the combined weight of the four propeller assemblies, the base assembly, and the PCB of the kit is less than 1 kilogram (kg). For example, the kit may be for a micro-drone that, in assembled form, weighs no more than 250 grams (g).

In some non claimed embodiments, a kit for an unmanned aerial vehicle comprises at least one propeller assembly, a base assembly coupled to or configured to be coupled to the at least one propeller assembly, and a printed circuit board coupled to or configured to be coupled to the base assembly. The printed circuit board comprises a mechanical feature (e.g., a cutout) configured to engage with a peripheral (e.g., a camera). In some non claimed embodiments, the kit includes the peripheral (e.g., a camera). In some non claimed embodiments, in which the peripheral is a camera, the kit includes a protective ring coupled to or configured to be coupled to the camera.

In some non claimed embodiments, the kit includes a plurality of motors coupled to or configured to be coupled to the four propeller assemblies. In some embodiments, the base assembly comprises a plurality of motors.

In some non claimed embodiments, the combined weight of the at least one propeller assembly, the base assembly, and the PCB of the kit is less than 1 kilogram (kg). For example, the kit may be for a micro-drone that, in assembled form, weighs no more than 250 grams (g).

Document D1 (CN205469856U) relates to a utility model that relates to a power supply module, unmanned vehicles and remote control mobile device unmanned vehicles. The power supply module includes a mounting bracket, energy supply device and at least two functional modules. The mounting bracket sets up on the fuselage, the energy supply device is set up on the mounting bracket. The mounting bracket includes at least two installation departments, at least two functional modules set up respectively on at least two installation departments, and respectively with energy supply device electric connection. The above mentioned power supply module's volume is less relatively and the dismounting is comparatively convenient.

Document D2 (US2016122015A1) relates to unmanned aerial vehicles and methods for providing the same. The unmanned aerial vehicles may have various configurations related to a support frame. The unmanned aerial vehicles may have various configurations with a continuous track for ground propulsion. The unmanned aerial vehicles may have various configurations related to payload clamps.

Document D3 (WO2016013933A1) relates to an aircraft, in particular an unmanned aerial vehicle with wing-borne flight mode and hover flight mode, comprising a wing structure (4) having a left (6), middle (7), and right wing section (8). A support structure extends from the wing structure (4), and has an upper and lower support section. Each one of the left and right wing section (6, 8), and upper and lower support section (18, 20) has a thrust unit (10, 12, 22, 24). Left and right wingtip sections are rotatable relative to a left and right wing base section, respectively, around an axis extending substantially in a lengthwise direction of the wing structure. The thrust units (10,1 2) of the left and right wing sections (6, 8) are provided at the respective wingtip sections, in particular at the extremities thereof.

Document D4 (CN204250368U) relates to a utility model that relates to the technical field of unmanned aerial equipment and in particular relates to a miniature four-rotor aircraft for intelligent aerial photography. The miniature four-rotor aircraft comprises a rack and is characterized in that four layers of printed circuit boards of an integrated circuit are arranged on the rack, wherein motor mounting holes are formed in four corners of the rack; high-speed hollow cup motors are correspondingly mounted on the motor mounting holes; propeller blades are mounted on high-speed hollow cup motors; taking-off and shock-absorbing seats sleeve the tails of the high-speed hollow cup motors; a lithium battery is mounted on the rack; a camera viewing angle regulator is also arranged under the front of the rack; a camera is mounted on the camera viewing angle regulator; single-chip microcontrollers are arranged on the four layers of printed circuit boards; the peripheries of the single-chip microcontrollers are connected with a Micro SD card, a USB (Universal Serial Bus) module, a USB transfer serial port, a camera, a 2.4G+PA wireless module, an attitude sensor and a motor driving module; the motor driving module is connected with the high-speed hollow cup motors.

### BRIEF DESCRIPTION OF THE DRAWINGS

Objects, features, and advantages of the disclosure will be readily apparent from the following description of certain embodiments taken in conjunction with the accompanying drawings in which:
FIG. 1 is a perspective right, front view of an unmanned aerial vehicle (UAV) in accordance with some embodiments.
FIG. 2 is a perspective left, rear view of an UAV in accordance with some embodiments.
FIG. 3A is a left plan view of an UAV in accordance with some embodiments.
FIG. 3B is a close-up left plan view of a portion of the vertically-oriented printed circuit board of the UAV shown in FIG. 3A.
FIG. 4 is a top plan view of an UAV in accordance with some embodiments.
FIG. 5 is a front plan view of an UAV in accordance with some embodiments.
FIG. 6 is a perspective right, front view of an UAV having an optional protective camera ring in accordance with some embodiments.
FIG. 7A is top plan view of an UAV in accordance with some non claimed embodiments.
FIG. 7B is a close-up top plan view of a portion of the horizontally-oriented printed circuit board of the UAV shown in FIG. 7A.
FIG. 8A is top plan view of an UAV in accordance with some non claimed embodiments.
FIG. 8B is a close-up top plan view of a portion of the horizontally-oriented printed circuit board of the UAV shown in FIG. 8A.

### DETAILED DESCRIPTION

The detailed description set forth below in connection with the appended drawings is intended as a description of various configurations and is not intended to represent the only configurations in which the concepts described herein may be practiced. The detailed description includes specific details for providing a thorough understanding of various concepts. It will be apparent to those skilled in the art that these concepts may be practiced without these specific details. In some instances, well-known structures and components are shown in block diagram form in order to avoid obscuring such concepts.

Unmanned aerial vehicles (UAVs) are aircraft without an on-board human pilot. UAVs have many uses, including in military, commercial (e.g., package deliveries, land surveys, etc.), scientific, recreational, agricultural, and other applications. One type of UAV is known as a "quadcopter," which has four rotors (also referred to herein as propellers). A UAV may include a camera that provides a first-person view (FPV) of the flight to a remotely-located viewer, such as, for example, the UAV's pilot or an observer. The viewer may view the flight using a display, such as, for example, a headset that presents the first-person view, thereby giving the viewer the sense that he or she is aboard the UAV.

A popular use of UAVs is for FPV drone racing, in which participants (pilots) control drones (e.g., small radio-controlled aircraft or quadcopters) flown through a course. Each pilot's objective is to complete the course as quickly as possible. The drones are equipped with cameras that wirelessly transmit live video streams to displays accessible to the pilots. The display may be, for example, a head-mounted display (e.g., a headset, goggles, etc.). The display shows a live-stream camera feed from the drone being flown by the pilot.

For drone racing and other applications, the flight characteristics of the UAV are important. Both the speed and maneuverability of the UAV can impact the user experience. Therefore, there is an ongoing need for UAV's with improved flight characteristics.

Disclosed herein are UAV designs providing such improved flight characteristics. Some embodiments described herein may provide a UAV with greater maneuverability than conventional UAVs. Some embodiments described herein may provide a UAV with more desirable aerodynamics than conventional UAVs. Some embodiments described herein may provide a UAV with greater modularity of its component parts than conventional UAVs. Based on these and other benefits, embodiments described herein may provide UAVs that better perform existing functions of UAVs and/or allow new uses of UAVs.

The embodiments of UAVs disclosed herein include a vertically-mounted printed circuit board (PCB). With the convention that the ground is horizontal, a vertically-mounted PCB is perpendicular to the ground when the UAV is level and at rest (e.g., on the ground or on another horizontal surface). In contrast, a horizontally-mounted PCB is parallel to the ground when the UAV is level and at rest. As used herein, the term "printed circuit board" (or "PCB") refers to a board that mechanically supports and electrically connects electronic components (including active (e.g., integrated circuits, etc.) and/or passive (e.g., resistors, inductors, capacitors, etc.)) using conductive tracks, pads, and/or other features etched from conductive sheets (typically copper) laminated onto a non-conductive substrate (e.g., silicon oxide, aluminum oxide, FR-4 glass epoxy, etc.). The electronic components may be soldered to the PCB and/or embedded in the substrate. A PCB may be single-sided (with one conductive layer), double-sided (with two conductive layers), or multi-layer (with inner and outer conductive layers). The term "PCB" is used herein to refer to both assembled (i.e., populated with components) and unassembled (i.e., bare) PCBs.

The use of a vertically-mounted PCB in a UAV offers a number of potential advantages. For example, a vertically-mounted PCB improves the stability of the UAV, particularly when the UAV flies or hovers close to surfaces (e.g., the ground) and might otherwise be negatively impacted by ground effect (e.g., vibrations or instabilities caused when rotor tip vortices are disrupted by the ground). A vertically-mounted PCB also helps to stabilize the UAV and helps to prevent or mitigate unintentional rotation when the UAV flies in the forward direction. A vertically-mounted PCB provides advantages similar to those provided by an airplane's rudder to improve the UAV's tolerance to wind. In addition, a vertically-mounted PCB potentially enables the UAV to fly faster, which may be particularly advantageous for applications such as drone racing. For example, UAVs typically pitch forward during flight, which results in horizontally-mounted PCBs and other components presenting a significant surface area that causes air resistance. By mounting the PCB vertically, this resistance decreases because only the thin edge of the PCB presents a barrier to the air. Most of the air flows around the vertically-mounted PCB when the UAV flies in the forward direction, regardless of whether or how much the UAV pitches forward.

The embodiments of UAVs disclosed herein include novel peripheral attachment mechanisms that provide a simple, inexpensive way to attach peripherals to the UAV. The PCB of the UAV includes a mechanical feature to allow the connection of a peripheral (e.g., a vision sensor, such as a camera, LIDAR, or other vision system; an audio sensor, such as a microphone or other audio system, etc.) to the UAV. The mechanical feature may be, for example, a cutout in the PCB into which a peripheral or a peripheral subassembly containing the peripheral may be inserted.

The disclosures herein are applicable to UAVs of various sizes. The application of the disclosures herein to small and/or lightweight UAVs or micro aerial vehicles (MAVs) (i.e., miniature UAVs) is specifically contemplated and may be particularly advantageous. In particular, the disclosures herein may be particularly useful for UAVs weighing less than about 1 kilogram (kg).

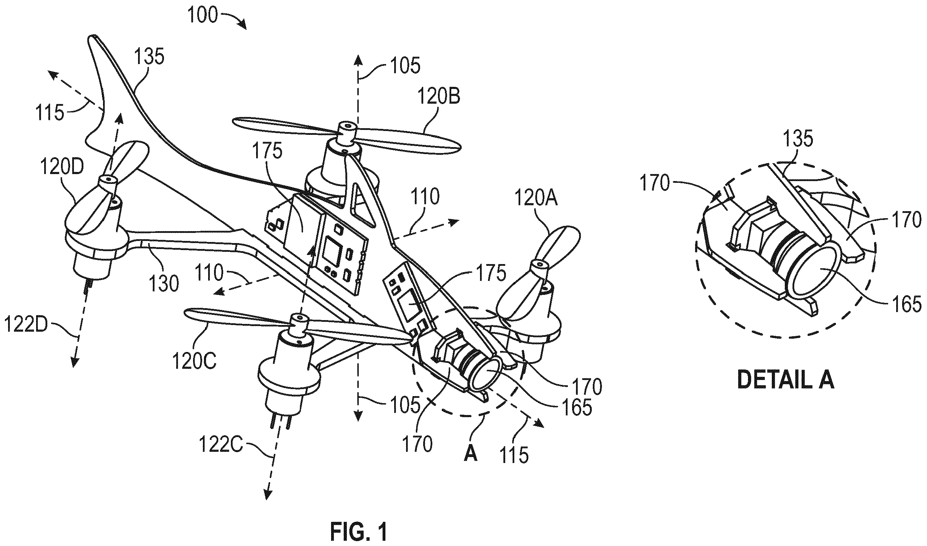

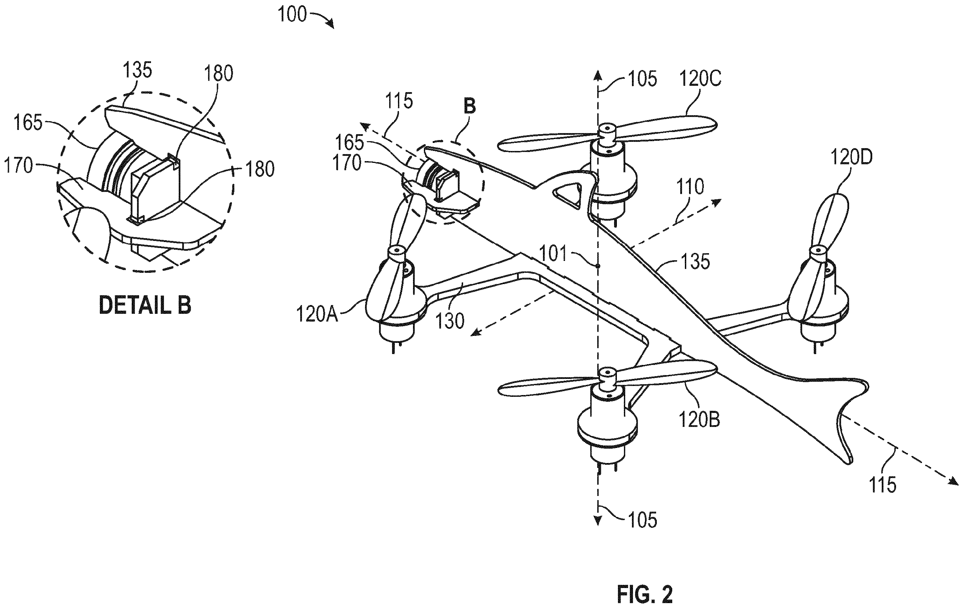

FIG. 1 is a perspective right, front view of a UAV 100 in accordance with some embodiments, and FIG. 2 is a perspective left, rear view of the UAV 100 in accordance with some embodiments. The UAV 100 is described herein relative to its principal axes, namely the yaw axis 105 (also known as the vertical axis), the pitch axis 110 (also known as the lateral axis), and the roll axis 115 (also known as the longitudinal axis). The yaw axis 105, pitch axis 110, and roll axis 115 intersect at the center of mass 101 of the UAV 100 (not labeled in FIG. 1, but labeled in FIG. 2). The plane coincident with (i.e., intersecting) the roll axis 115 and the pitch axis 110 is considered to be a horizontal plane. The plane coincident with the roll axis 115 and the yaw axis 105 and the plane coincident with the pitch axis 110 and the yaw axis 105 are both considered to be vertical planes. Herein, a plane is said to be "defined by" two specified axes if it is either coincident with those two axes or parallel to the plane that is coincident with those axes.

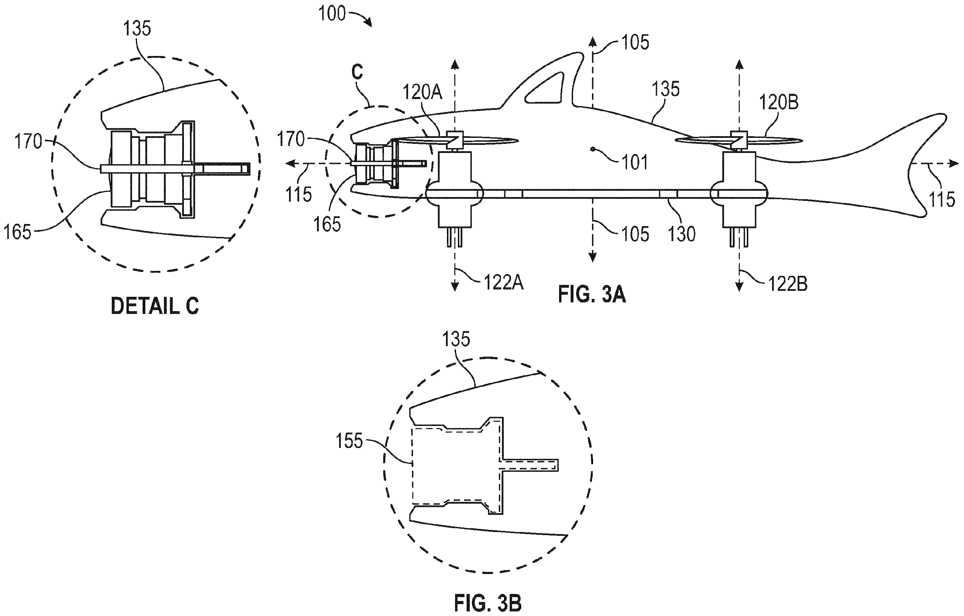

The UAV comprises a plurality (i.e., at least two) propeller assemblies 120. In the exemplary embodiment of FIGS. 1 and 2, the UAV 100 includes four propeller assemblies: 120A, 120B, 120C, and 120D. Each of the propeller assemblies 120 comprises at least one rotor. In some embodiments, such as illustrated in FIGS. 1 and 2, each propeller assembly 120 includes a pair of rotors facing one another. In other embodiments, the propeller assemblies 120 may include more than two rotors. The propeller assemblies 120 may comprise any suitable materials, such as, for example, plastic, carbon fiber, high-strength steel, a magnesium (Mg) alloy, an aluminum (Al) alloy, polymer composites, or any other suitable (e.g., light-weight) material. When the UAV 100 is in operation, each of the propeller assemblies 120 rotates about an axis of rotation 122. FIG. 1 illustrates only the axes of rotation 122C and 122D for, respectively, the propeller assemblies 120C and 120D. FIG. 3, discussed below, illustrates the axes of rotation 122A and 122B for, respectively, the propeller assemblies 120A and 120B. In some embodiments, the axis of rotation 122 of some or all of the propeller assemblies 120 is parallel to the yaw axis 105. In other embodiments, the axis of rotation 122 of at least one of the propeller assemblies 120 is at an angle to the yaw axis 105. In some embodiments, the axes of rotation 122 of all of the propeller assemblies 120 are at angles to the yaw axis 105, where the angles may be the same or different.

Each of the propeller assemblies 120 optionally may be protected by a propeller guard (not illustrated). If included, the propeller guards may be substantially rigid structures, typically mounted substantially horizontally, that surround the rotors of the propeller assemblies 120 to protect the propeller assemblies 120 in the event of collisions between the UAV 100 and other objects (flying or stationary).

As illustrated in FIGS. 1 and 2, each of the propeller assemblies 120 is coupled to a base assembly 130. The base assembly 130 may include, or be coupled to, four motors oriented, for example, in an "X"- or "H"-shaped pattern. Each motor is coupled to one of the propeller assemblies 120 and provides aerial propulsion to the UAV 100. The speed of revolution of the motors may be controlled by a processor included in the circuitry 175, discussed below. The base assembly 130 may also include, or be coupled to, other elements, including, for example, pads that contact a surface when the UAV 100 is at rest (e.g., not flying). The base assembly 130 may comprise any suitable material, such as, for example, plastic, metal, carbon fiber, polymer composites, PCB, etc. The base assembly 130 may include conductors that provide power and/or other signals (e.g., control signals) to the motors that drive the plurality of propeller assemblies 120. For example, the base assembly may comprise a PCB with traces that supply power and/or control signals to the motors that drive the plurality of propeller assemblies 120.

The UAV 100 also includes a printed circuit board (PCB) 135 coupled to the base assembly 130. In the embodiment illustrated in FIG. 1, the PCB 135 is mounted vertically in a plane defined by the yaw axis 105 and the roll axis 115. Because the PCB 135 is mounted vertically and lies in a plane defined by the yaw axis 105 and the roll axis 115, the PCB 135 does not intersect any (substantially vertical) axis of rotation 122 of any of the propeller assemblies 120 of FIG. 1.

As shown in FIG. 1, the PCB 135 is populated and includes circuitry 175. The circuitry 175 may include components mounted directly to the surface of the PCB 135, and/or the circuitry 175 may be mounted to a daughter card that is coupled to the surface of the PCB 135 (e.g., through a socket or by soldering). The circuitry 175 may include a processor that may use differences in rotational speeds of the motors, and therefore the propeller assemblies 120, to control the flight of the UAV 100. As illustrated in FIG. 1, each propeller assembly 120 is provided facing another propeller assembly 120. Propeller assemblies 120 that face each other may spin in opposite directions to prevent their lifting forces from canceling each other. For example, the propeller assemblies 120A and 120D may spin clockwise while the propeller assemblies 120B and 120C spin counterclockwise, or vice versa.

The circuitry 175 may include, for example, memory to store software run by a processor to control the UAV 100 and/or to communicate (e.g., using additional components, such as a transmitter and receiver) with a remote device (e.g., a display), to store data received from peripherals 165 of the UAV 100, and/or to store commands or instructions received from a remote device (e.g., a remote user control device).

The circuitry 175 may include, for example, communication circuitry enabling the UAV 100 to communicate wirelessly (e.g., using radio-frequency (RF) signals) with a remote user control device (e.g., a device that enables a pilot to control the UAV 100). For example, the circuitry 175 may include a receiver for receiving commands from the remote user control device. In addition or alternatively, the circuitry 175 may include a transmitter for transmitting information to a remote device (e.g., the remote user control device). For example, the circuitry 175 may transmit a live video stream from a camera mounted on the UAV 100 to a remote device. The UAV 100 may also include components in addition to circuitry 175 to enable the UAV 100 to transmit signals to or receive signals from a remote device. For example, the UAV 100 may include an antenna and wiring coupling the antenna to the transmitter/receiver.

In some embodiments, when the UAV 100 is fully assembled (i.e., in finished form, ready to fly), all or a portion of the surface of the PCB 135 is exposed (i.e., visible) in the fully-assembled UAV 100. For example, all or a portion of the surface of the PCB 135 may be covered by a transparent or translucent coating that allows at least some of the circuitry 175 to be seen. In other embodiments, all or a portion of the surface of the PCB 135 is partially or entirely hidden. For example, all or a portion of the surface of the PCB 135 may be covered by an opaque coating, or all or a portion of the PCB 125 may be inside of a housing that obscures the circuitry 175.

In some embodiments, the PCB 135 has a nonrectangular shape. For example, the PCB 135 may have the shape of an animal. As illustrated in FIGS. 1 and 2, the animal may be a shark. Other animal shapes are contemplated and are within the scope of the disclosures herein. In general, the PCB 135 may have any desired shape, such as a regular shape (e.g., a rectangle, square, triangle) or an irregular shape. Thus, the PCB 135 may provide a whimsical design element to the UAV 100.

The PCB 135 is configured to allow the attachment of various components or devices (e.g., sensor devices) to the UAV 100. The PCB 135 includes a mechanical feature to allow the connection of a peripheral 165 (e.g., a vision sensor, such as a camera, LIDAR, or other vision system; an audio sensor, such as a microphone or other audio system; etc.).

In some embodiments, the UAV 100 includes a peripheral 165. For example, in the embodiment illustrated in FIGS. 1 and 2, the peripheral 165 is a camera. In some embodiments, the peripheral 165 mounts directly to the UAV 100 by engaging with a mechanical feature of the PCB 135. In some embodiments, and as illustrated in FIGS. 1 and 2, the peripheral 165 is included in a peripheral subassembly 170, and the peripheral subassembly 170 is coupled to the UAV 100 (e.g., by engaging with a mechanical feature of the UAV 100, such as a mechanical feature of the PCB 135). In some such embodiments, the peripheral subassembly 170 includes conductive traces printed onto or within the material making up the peripheral subassembly 170. For example, the peripheral subassembly 170 may comprise a PCB. The conductive traces may provide electrical connections between the peripheral 165 mounted in the peripheral subassembly 170 and the circuitry 175 of the UAV 100 when the peripheral subassembly 170 is connected to the UAV 100. For example, the conductive traces may provide power to the peripheral 165 and/or electrical connections between the peripheral 165 and a processor of the circuitry 175.

In the example embodiment of FIGS. 1 and 2, the peripheral subassembly 170 engages with a mechanical feature of the PCB 135, as shown in details A and B. For example, the peripheral subassembly 170 may slide into place in a cutout of the PCB 135. The attachment point or points between the peripheral subassembly 170 and the PCB 135 may provide electrical connections between components of the peripheral subassembly 170 (including the peripheral 165 itself) and the PCB 135. For example, the PCB 135 may include electrical connection points (e.g., to engage with solder pads 180 of the peripheral 165 or peripheral assembly 170), and the peripheral subassembly 170 or the peripheral 165 itself may include corresponding electrical connection points (e.g., solder pads 180) that are configured to align with the electrical connection points of the PCB 135 when the peripheral 165 or peripheral subassembly 170 engages with the PCB 135, thereby creating a closed electrical circuit between the peripheral(s) 165 (e.g., of the peripheral subassembly 170) and the circuitry 175. Thus, signals (e.g., control, data, etc.) and/or power may be transferred between peripherals 165 (e.g., of the peripheral subassembly 170) and the circuitry 175.

In some embodiments, the peripheral 165 is electrically connected to the PCB 135 through a mechanical connection made when the peripheral subassembly 170 engages with the mechanical feature of the PCB 135. For example, the peripheral subassembly 170 may include pins or other contacts that engage with a socket or other component of the PCB 135 when the peripheral subassembly 170 engages with the mechanical feature. In some embodiments, after the peripheral subassembly 170 engages with the mechanical feature, one or more electrical connections are made through a bond or joint (e.g., solder). As another example, the peripheral 165 may be electrically connected to the PCB 135 using a cable or wires. In some embodiments, the connection between the peripheral 165 and the UAV 100 is partially or completely wireless.

The UAV 100 also includes a power source, which may be, for example, a rechargeable battery. In embodiments in which the power source is a rechargeable battery, the battery may be removable to facilitate charging.

FIG. 3A is a left plan view of a UAV 100 in accordance with some embodiments. As shown in FIG. 3A, the surface of the PCB 135 lies in a plane defined by the yaw axis 105 and the roll axis 115. FIG. 3B illustrates the PCB 135 with a mechanical feature (illustrated as a cutout 155) that enables a peripheral subassembly 170 (illustrated as including a camera as the peripheral 165) to be mounted to the UAV 100 (also shown in detail C of FIG. 3A). As shown in FIGS. 3A and 3B, the cutout 155 allows the peripheral subassembly 170 to slide into place laterally (i.e., from the side, perpendicularly to the PCB 135). In the embodiment shown in FIGS. 3A and 3B, the peripheral subassembly 170 has a form factor designed to fit within the cutout 155. The cutout 155 is illustrated in FIGS. 3A and 3B as having a particular shape, but it is to be appreciated that the cutout 155 may have alternative shapes. In general, the cutout 155 may have any suitable shape for engaging with the peripheral subassembly 170 (e.g., the cutout 155 may include a notch, a groove, a partial circle, a dovetail, etc.).

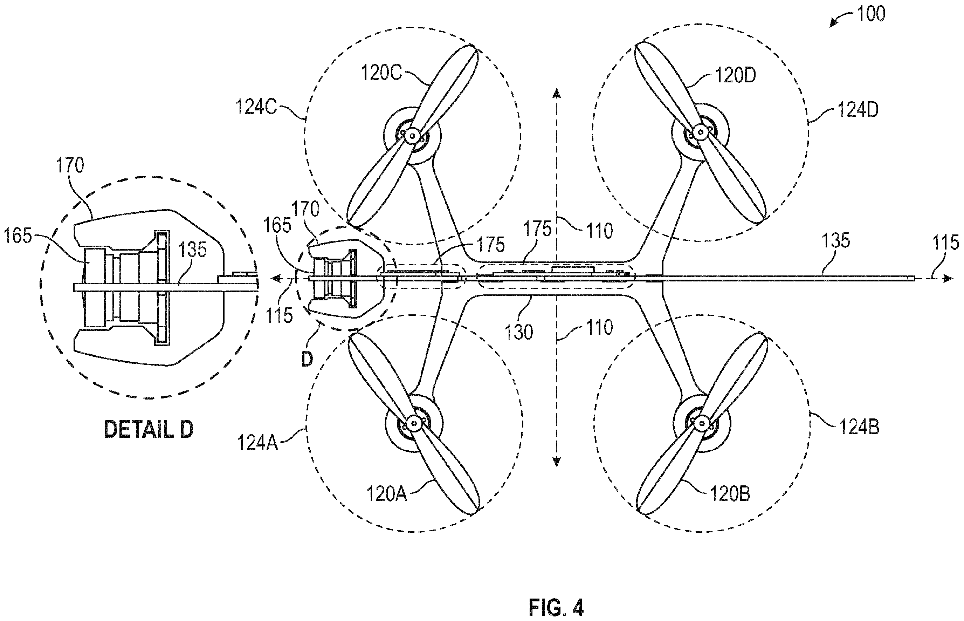

FIG. 4 is a top plan view of a UAV 100 in accordance with some embodiments. In addition to features previously discussed in the context of other drawings herein, FIG. 4 illustrates the rotation circumferences 124 of each of the propeller assemblies 120. Specifically, FIG. 4 illustrates the rotation circumferences 124A, 124B, 124C, and 124D of, respectively, the propeller assemblies 120A, 120B, 120C, and 120D. As shown in FIG. 4, the vertically-mounted PCB 135 does not intersect any of the rotation circumferences 124. Moreover, no surface of the PCB 135 intersects any projection of the rotation circumferences 124 onto any plane that is orthogonal to any of the axes of rotation 122. In other words, if the rotation circumference 124 of any of the propeller assemblies 120A, 120B, 120C, or 120D were projected onto any arbitrary plane that is orthogonal to the corresponding axis of rotation 122A, 122B, 122C, or 122D, the PCB 135 would not intersect the projection.

The detail D of FIG. 4 illustrates the peripheral subassembly 170 in place and engaged with the PCB 135 by the mechanical feature of the PCB 135. The peripheral subassembly 170 may have any shape and configuration suitable to secure the peripheral(s) 165 it contains to the UAV 100. In the embodiment shown in FIGS. 1-4, the peripheral subassembly 170 comprises an element (e.g., a PCB) that, when the peripheral subassembly 170 is engaged with the UAV 100, lies in a horizontal plane. It is to be understood that other peripheral subassembly 170 configurations, sizes, and shapes are also contemplated and are within the scope of the disclosures herein.

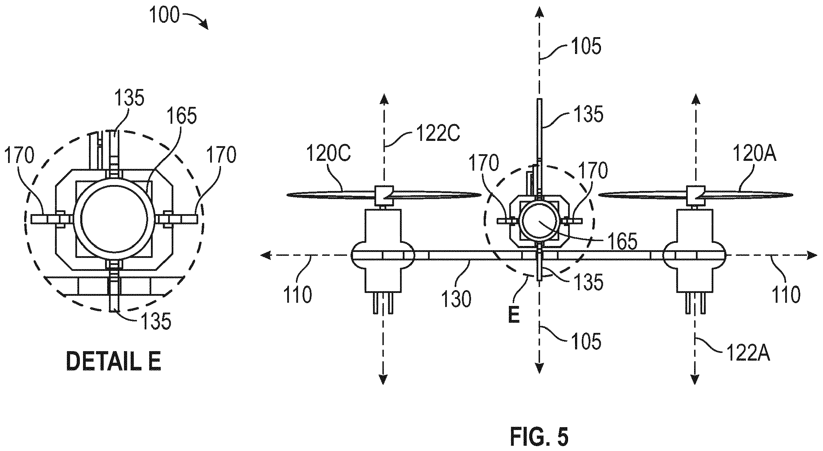

FIG. 5 is a front plan view of a UAV 100 in accordance with some embodiments. As illustrated by FIG. 5 and in detail E, the peripheral subassembly 170, illustrated as having a camera as the peripheral 165, is coupled to the PCB 135. In the embodiment illustrated in FIG. 5, when the peripheral subassembly 170 is engaged with the PCB 135, the top and bottom of the peripheral 165 are secured by the PCB 135, and the left and right of the peripheral 165 are secured by the peripheral subassembly 170. Thus, the combination of the peripheral subassembly 170 and the PCB 135 (with cutout 155) enables the peripheral 165 to be mounted simply and securely to the UAV 100.

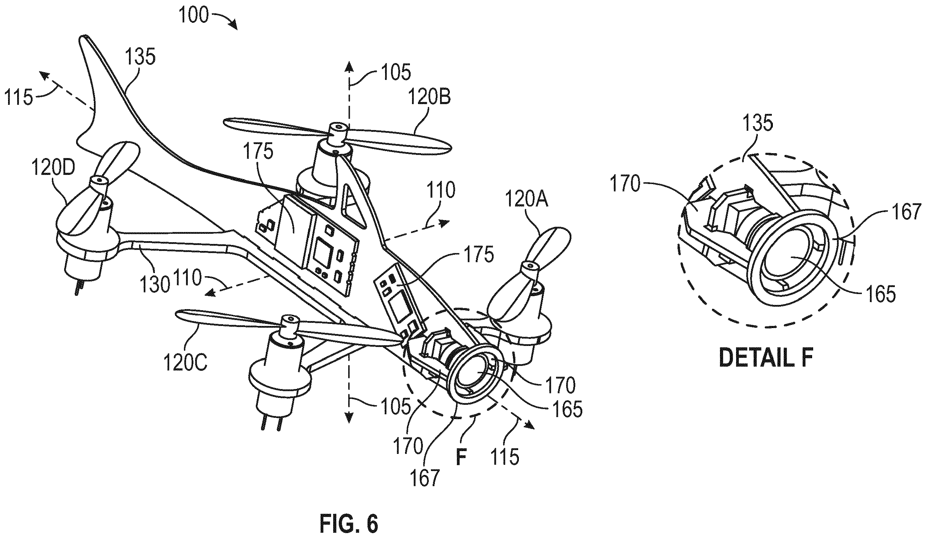

FIG. 6 is a perspective right, front view of a UAV 100 having an optional peripheral protection device in accordance with some embodiments. In the embodiment of FIG. 6, the peripheral subassembly 170 includes a peripheral 165 that is a camera, and the UAV 100 includes a camera protective ring 167. As illustrated in FIG. 6, the camera protective ring 167 is configured to engage with the peripheral subassembly 170 and/or the PCB 135 to mitigate damage to the camera (e.g., to the lens of the camera) caused by collisions (e.g., with other flying objects or with stationary objects into which the UAV 100 flies). The camera protective ring 167 may be coupled to the peripheral subassembly 170 and/or PCB 135 using any suitable mechanism. For example, the camera protective ring 167 may include a plurality of notches shaped to allow the camera protective ring 167 to slide over protrusions of the peripheral subassembly 170 and/or the PCB 135. As another example, the camera protective ring 167 may be secured to the UAV 100 by adhesive or a fastening mechanism (e.g., a screw, a snap, etc.). The camera protective ring 167 may be made of any suitable material, such as, for example, plastic, metal, carbon fiber, rubber, PCB (in which case it may also provide electrical connectivity), etc. It is to be appreciated that the camera protective ring 167 could alternatively be attached directly to the camera. Moreover, other protective devices may be included to protect other types of peripherals 165 that may be included in the peripheral subassembly 170.

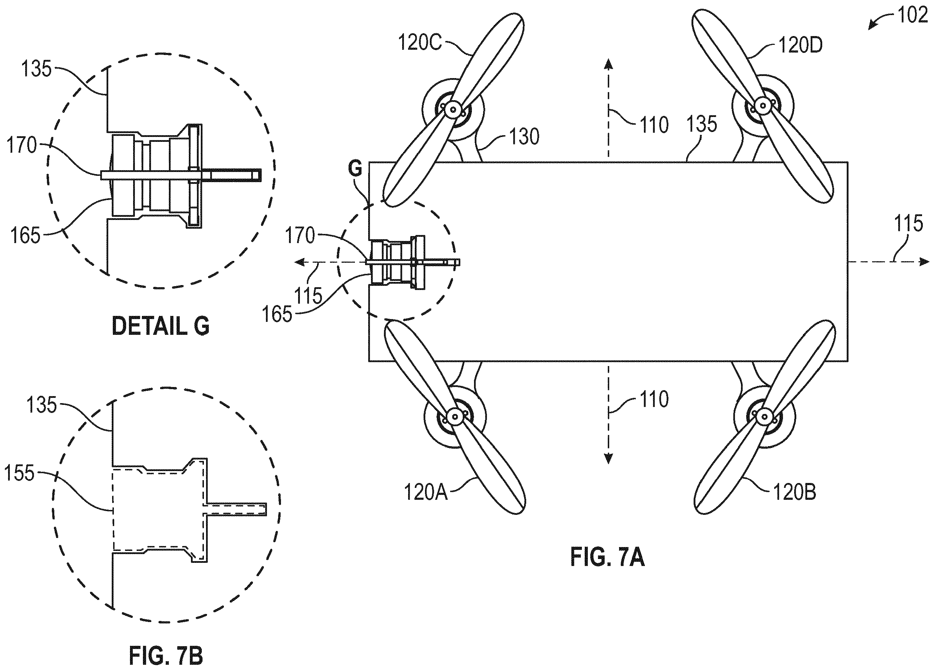

FIGS. 7A and 7B illustrate a UAV 102 in accordance with some non claimed embodiments. The UAV 102 includes four propeller assemblies 120A, 120B, 120C, and 120D, a base assembly 130, and some or all of the other elements discussed previously in the description of the UAV 100. In addition, the UAV 102 includes a PCB 135. In the embodiment of the UAV 102 shown in FIGS. 7A and 7B, the PCB 135 has a rectangular shape and is mounted horizontally (i.e., in a plane defined by the pitch axis 110 and the roll axis 115). Although FIG. 7A illustrates a PCB 135 with a rectangular shape, it is to be appreciated that the PCB 135 may have any suitable shape, including regular geometric or irregular shapes. For example, the PCB 135 may have an oval shape, or it may be shaped like an object (e.g., a bird, a fish, a shark, etc.), or it may have any other selected shape that can be coupled to the base assembly 130 and does not interfere with the propeller assemblies 120.

In FIG. 7A, the PCB 135 is illustrated without circuitry 175, but it is to be understood that the PCB 135 may include circuitry 175 (i.e., the PCB 135 is populated), and this circuitry 175 may be as described previously in the discussion of the UAV 100. In some embodiments, when the UAV 102 is fully assembled (i.e., in finished form, ready to fly), all or a portion of the surface of the PCB 135 is exposed (i.e., visible) in the fully-assembled UAV 102. For example, all or a portion of the surface of the PCB 135 may be covered by a transparent or translucent coating that allows at least some of the circuitry 175 to be seen. In other embodiments, all or a portion of the surface of the PCB 135 is partially or entirely hidden. For example, all or a portion of the surface of the PCB 135 may be covered by an opaque coating, or all or a portion of the PCB 125 may be inside of a housing that obscures the circuitry 175.

As shown in the detail G, the PCB 135 includes a mechanical feature, shown as a cutout 155, that enables the peripheral subassembly 170 to be coupled to the PCB 135 (and therefore to the UAV 102). The cutout 155 shown in FIGS. 7A and 7B has a shape that is similar to the shape of the cutout 155 shown in FIGS. 1-6, but it is to be appreciated that the cutout 155 may have a different shape as explained previously. Moreover, although the peripheral 165 is illustrated as a camera, it is to be understood that other peripherals 165 are contemplated and may be coupled to the UAV 102 as described above.

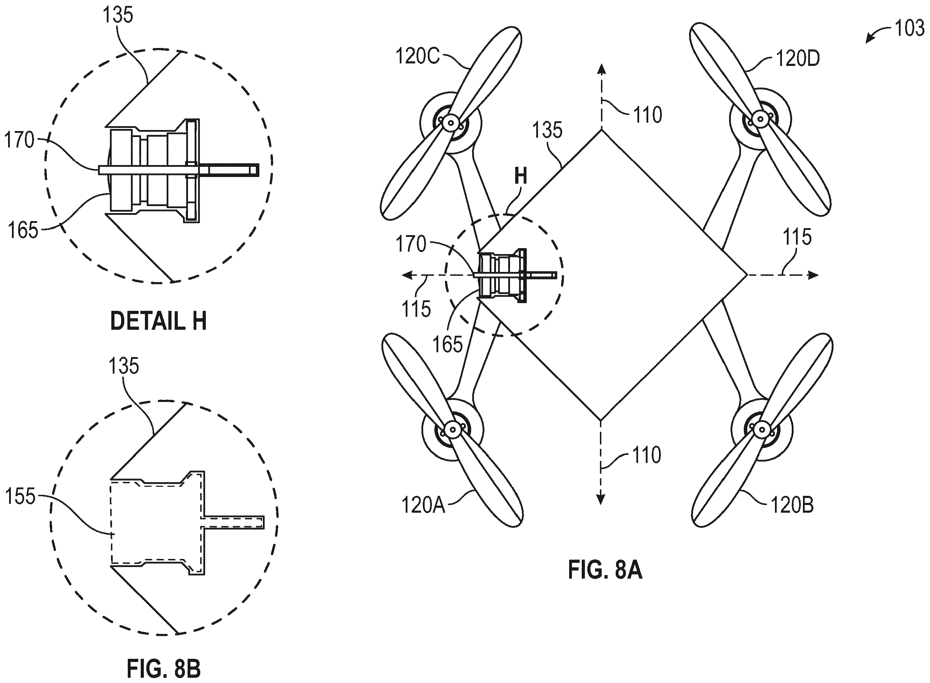

FIGS. 8A and 8B illustrate UAV 103 in accordance with some non claimed embodiments. The UAV 103 includes four propeller assemblies 120A, 120B, 120C, and 120D, a base assembly 130, and some or all of the other elements discussed previously in the description of the UAV 100. In addition, the UAV 103 includes a PCB 135. In the embodiment of the UAV 103 shown in FIGS. 8A and 8B, the PCB 135 has a substantially square shape and is mounted horizontally (i.e., in a plane defined by the pitch axis 110 and the roll axis 115) with one corner of the PCB 135 aligned with the roll axis 115, and two corners of the PCB 135 aligned with the pitch axis 110.

In FIG. 8A, the PCB 135 is illustrated without circuitry 175, but it is to be understood that the PCB 135 may include circuitry 175 (i.e., the PCB 135 is populated), and this circuitry 175 may be as described previously in the discussion of the UAV 100. In some embodiments, when the UAV 103 is fully assembled (i.e., in finished form, ready to fly), all or a portion of the surface of the PCB 135 is exposed (i.e., visible) in the fully-assembled UAV 103. For example, all or a portion of the surface of the PCB 135 may be covered by a transparent or translucent coating that allows at least some of the circuitry 175 to be seen. In other embodiments, all or a portion of the surface of the PCB 135 is partially or entirely hidden. For example, all or a portion of the surface of the PCB 135 may be covered by an opaque coating, or all or a portion of the PCB 125 may be inside of a housing that obscures the circuitry 175.

As shown in the detail H, the PCB 135 includes a mechanical feature, shown as a cutout 155, that enables the peripheral subassembly 170 to be coupled to the PCB 135 (and therefore to the UAV 103). The cutout 155 shown in FIGS. 8A and 8B has a shape that is similar to the shape of the cutout 155 shown in FIGS. 1-7, but it is to be appreciated that the cutout 155 may have a different shape as explained previously. Furthermore, although the peripheral 165 is illustrated once again as a camera, it is to be understood that other peripherals 165 are contemplated and may be coupled to the UAV 103 as described above.

Although the drawings herein illustrate a cutout 155 as the mechanical feature enabling a peripheral 165 to be attached to the UAV 100, 102, 103, it is to be understood that other mechanical features may be used instead or in addition to a cutout 155. For example, the mechanical feature may comprise a protrusion, where the protrusion that fits within a cutout, slot, or hole in the peripheral subassembly 170 or peripheral 165; a hook providing a compressive fit with the peripheral subassembly 170 or peripheral 165; a first portion of a joint (e.g., one of two parts of: a ball joint, a bridle joint, an open tenon joint, an open mortise and tenon joint, a tongue and fork joint, a dowel joint, a finger joint, a dovetail joint, dado joint, groove joint, tongue and groove joint, birdsmouth joint, cross lap joint, splice joint, biscuit joint, stitch and glue joint, etc.) that mates with a second portion of the joint on the peripheral subassembly 170 or the peripheral 165 itself; or a first portion of any permanent, semi-permanent, or temporary fastener (i.e., a hardware device that mechanically joins or affixes two or more objects together) that has a suitable size and strength to affix the peripheral subassembly 170 (or the peripheral 165 itself) to the UAV 100, 102, 103.

It is also to be understood that although the drawings herein illustrate a camera as the peripheral 165 in the peripheral subassembly 170, the disclosures apply as well to other peripherals 165 that might be attached to the UAV 100, 102, 103. For example, the peripheral 165 may comprise one or more of: a clock, a timer (e.g., to detect time of flight), lidar, a light source (e.g., an OLED, a bulb, a LED, etc.), a radio transmitter, a Bluetooth module, an altimeter, a temperature sensor, a sample collector (e.g., to collect a sample of fluid, gas, soil, etc.), a mechanical device (e.g., to grip a payload or perform a task), an audio device (e.g., a microphone, a speaker, etc.), an accelerometer, a sensor, etc. In addition, a peripheral subassembly 170 may include or accommodate multiple peripherals 165 (e.g., a camera and an audio device).

It is also to be understood that although the drawings herein illustrate a peripheral subassembly 170, the peripheral 165 may not need such a peripheral subassembly 170. In such cases, the peripheral subassembly 170 and the peripheral 165 are one and the same.

To avoid obscuring the present disclosure unnecessarily, well-known components of the UAVs 100, 102, 103 (e.g., motors, wireless transmitters and receivers, processors, etc.) are not illustrated and/or discussed in detail or, in some cases, at all.

Unless otherwise specifically defined herein, all terms are to be given their broadest possible interpretation, including meanings implied from the specification and drawings and meanings understood by those skilled in the art and/or as defined in dictionaries, treatises, etc. As set forth explicitly herein, some terms may not comport with their ordinary or customary meanings.

As used in the specification and the appended claims, the singular forms "a," "an" and "the" do not exclude plural referents unless otherwise specified. The word "or" is to be interpreted as inclusive unless otherwise specified. Thus, the phrase "A or B" is to be interpreted as meaning all of the following: "both A and B," "A but not B," and "B but not A." Any use of "and/or" herein does not mean that the word "or" alone connotes exclusivity.

As used herein, phrases of the form "at least one of A, B, and C," "at least one of A, B, or C," "one or more of A, B, or C," and "one or more of A, B, and C" are interchangeable, and each encompasses all of the following meanings: "A only," "B only," "C only," "A and B but not C," "A and C but not B," "B and C but not A," and "all of A, B, and C."

The term "coupled" is used herein to express a direct connection as well as a connection through one or more intervening parts or structures. Elements that are "communicatively coupled" are capable of communicating but are not necessarily physically coupled. To the extent that the terms "include(s)," "having," "has," "with," and variants thereof are used in the detailed description or the claims, such terms are intended to be inclusive in a manner similar to the term "comprising," *i.e.*, meaning "including but not limited to." The terms "exemplary" and "embodiment" are used to express examples, not preferences or requirements. The term "plurality" means "at least two." The abbreviation "e.g." means "for example." The abbreviation "i.e." means "that is."

The terms "over," "under," "between," and "on" are used herein refer to a relative position of one feature with respect to other features. For example, one feature disposed "over" or "under" another feature may be directly in contact with the other feature or may have intervening material. Moreover, one feature disposed "between" two features may be directly in contact with the two features or may have one or more intervening features or materials. In contrast, a first feature "on" a second feature is in contact with that second feature.

The drawings are not necessarily to scale, and the dimensions, shapes, and sizes of the features may differ substantially from how they are depicted in the drawings.

## Claims

1. An unmanned aerial vehicle (100) having a yaw axis (105), a pitch axis (110), and a roll axis (115), which intersect at a center of mass (101) of the unmanned aerial vehicle (100), comprising:
a plurality of propeller assemblies (120), each of the plurality of propeller assemblies (120) configured to rotate about a respective one of a plurality of axes of rotation (122);
a base assembly (130) in a first plane defined by the pitch axis (110) and the roll axis (115), wherein the base assembly (130) is coupled to each of the plurality of propeller assemblies (120); and
a vertically-mounted printed circuit board (135) coupled and perpendicular to the base assembly (130), wherein:
the vertically-mounted printed circuit board (135) lies in a second plane comprising the yaw axis (105) and the roll axis (115);
no portion of the vertically-mounted printed circuit board (135) intersects any of the axes of rotation (122) of the propeller assemblies (120), and
wherein the vertically-mounted printed circuit board (135) comprises a mechanical feature configured to engage with a peripheral (165) or a peripheral subassembly (170) comprising the peripheral.

2. The unmanned aerial vehicle (100) recited in claim 1, wherein for each of the plurality of propeller assemblies (120), the vertically-mounted printed circuit board (135) does not intersect a projection, in a third plane, of a rotation circumference (124) of the propeller assembly (120), the third plane being orthogonal to the axis of rotation of the propeller assembly (120).

3. The unmanned aerial vehicle (100) recited in claim 1 or claim 2, wherein at least a portion of the vertically-mounted printed circuit board (135) is exposed.

4. The unmanned aerial vehicle (100) recited in any of claims 1 to 3, wherein the vertically-mounted printed circuit board (135) has a nonrectangular shape.

5. The unmanned aerial vehicle (100) recited in claim 4, wherein the nonrectangular shape is a shape of an animal.

6. The unmanned aerial vehicle (100) recited in claim 5, wherein the animal is a shark.

7. The unmanned aerial vehicle (100) recited in any of claims 1 to 6, wherein the plurality of propeller assemblies (120) comprises at least four propellers.

8. The unmanned aerial vehicle (100) recited in claim 1, wherein the mechanical feature is a cutout.

9. The unmanned aerial vehicle (100) recited in claim 8, further comprising the peripheral (165), and wherein the peripheral (165) or the peripheral subassembly (170) is slidably engaged in the cutout.

10. The unmanned aerial vehicle (100) recited in claim 9, wherein the peripheral (165) is electrically coupled to the vertically-mounted printed circuit board (135).

11. The unmanned aerial vehicle (100) recited in claim 9 or claim 10, wherein the peripheral (165) or the peripheral subassembly (170) is soldered to the vertically-mounted printed circuit board (135).

12. The unmanned aerial vehicle (100) recited in any of claims 7 to 11, wherein the peripheral (165) is a camera.

13. The unmanned aerial vehicle (100) recited in claim 12, further comprising a protective ring coupled to the camera.

14. The unmanned aerial vehicle (100) recited in any of claims 1 to 13, wherein a weight of the unmanned aerial vehicle (100) is less than 1 kg.

## Patentansprüche

1. Unbemanntes Luftfahrzeug (100) mit einer Gierachse (105), einer Nickachse (110) und einer Rollachse (115), die sich in einem Massenschwerpunkt (101) des unbemannten Luftfahrzeugs (100) schneiden, umfassend:
eine Mehrzahl von Propeller-Baugruppen (120), wobei jede der Mehrzahl von Propeller-Baugruppen (120) so konfiguriert ist, dass sie sich um eine entsprechende einer Mehrzahl von Rotationsachsen (122) dreht;
eine Basisbaugruppe (130) in einer ersten Ebene, die durch die Nickachse (110) und die Rollachse (115) definiert ist, wobei die Basisbaugruppe (130) mit jeder der Mehrzahl von Propeller-Baugruppen (120) gekoppelt ist; und
eine vertikal montierte Leiterplatte (135), die mit der Basisbaugruppe (130) gekoppelt und senkrecht zu ihr angeordnet ist, wobei:
die vertikal montierte Leiterplatte (135) in einer zweiten Ebene liegt, die die Gierachse (105) und die Rollachse (115) umfasst;
kein Abschnitt der vertikal montierten Leiterplatte (135) eine der Rotationsachsen (122) der Propeller-Baugruppen (120) schneidet, und
wobei die vertikal montierte Leiterplatte (135) ein mechanisches Merkmal aufweist, das so konfiguriert ist, dass es mit einem Peripheriegerät (165) oder einer Peripherie-Unterbaugruppe (170), die das Peripheriegerät umfasst, in Eingriff kommt.

2. Unbemanntes Luftfahrzeug (100) nach Anspruch 1, wobei für jede der Mehrzahl von Propeller-Baugruppen (120) die vertikal montierte Leiterplatte (135) eine Projektion in einer dritten Ebene eines Rotationsumfangs (124) der Propeller-Baugruppe (120) nicht schneidet, wobei die dritte Ebene orthogonal zur Rotationsachse der Propeller-Baugruppe (120) angeordnet ist.

3. Unbemanntes Luftfahrzeug (100) nach Anspruch 1 oder Anspruch 2, wobei mindestens ein Abschnitt der vertikal montierten Leiterplatte (135) freiliegt.

4. Unbemanntes Luftfahrzeug (100) nach einem der Ansprüche 1 bis 3, wobei die vertikal montierte Leiterplatte (135) eine nicht rechteckige Form aufweist.

5. Unbemanntes Luftfahrzeug (100) nach Anspruch 4, wobei die nicht rechteckige Form eine Form eines Tieres ist.

6. Unbemanntes Luftfahrzeug (100) nach Anspruch 5, wobei das Tier ein Hai ist.

7. Unbemanntes Luftfahrzeug (100) nach einem der Ansprüche 1 bis 6, wobei die Mehrzahl der Propeller-Baugruppen (120) mindestens vier Propeller umfasst.

8. Unbemanntes Luftfahrzeug (100) nach Anspruch 1, wobei das mechanische Merkmal eine Aussparung ist.

9. Unbemanntes Luftfahrzeug (100) nach Anspruch 8, ferner umfassend das Peripheriegerät (165), und wobei das Peripheriegerät (165) oder die Peripherie-Unterbaugruppe (170) gleitend in den Ausschnitt eingreift.

10. Unbemanntes Luftfahrzeug (100) nach Anspruch 9, wobei das Peripheriegerät (165) mit der vertikal montierten Leiterplatte (135) elektrisch gekoppelt ist.

11. Unbemanntes Luftfahrzeug (100) nach Anspruch 9 oder Anspruch 10, wobei das Peripheriegerät (165) oder die Peripherie-Unterbaugruppe (170) mit der vertikal montierten Leiterplatte (135) verlötet ist.

12. Unbemanntes Luftfahrzeug (100) nach einem der Ansprüche 7 bis 11, wobei das Peripheriegerät (165) eine Kamera ist.

13. Unbemanntes Luftfahrzeug (100) nach Anspruch 12, ferner umfassend einen Schutzring, der mit der Kamera verbunden ist.

14. Unbemanntes Luftfahrzeug (100) nach einem der Ansprüche 1 bis 13, wobei ein Gewicht des unbemannten Luftfahrzeugs (100) weniger als 1 kg beträgt.

## Revendications

1. Véhicule aérien sans pilote (100) ayant un axe de lacet (105), un axe de tangage (110) et un axe de roulis (115), lesquels se coupent au niveau d'un centre de masse (101) du véhicule aérien sans pilote (100), comprenant :
une pluralité d'ensembles hélice (120), chacun de la pluralité d'ensembles hélice (120) étant configuré pour tourner autour d'un axe respectif parmi une pluralité d'axes de rotation (122) ;
un ensemble base (130) dans un premier plan défini par l'axe de tangage (110) et l'axe de roulis (115), dans lequel l'ensemble base (130) est couplé à chacun de la pluralité d'ensembles hélice (120) ; et
une carte de circuit imprimé montée verticalement (135) couplée et perpendiculaire à l'ensemble base (130), dans lequel :
la carte de circuit imprimé montée verticalement (135) se trouve dans un deuxième plan comprenant l'axe de lacet (105) et l'axe de roulis (115) ;
aucune portion de la carte de circuit imprimé montée verticalement (135) ne coupe l'un quelconque des axes de rotation (122) des ensembles hélice (120), et
dans lequel la carte de circuit imprimé montée verticalement (135) comprend une caractéristique mécanique configurée pour se mettre en prise avec un périphérique (165) ou un sous-ensemble périphérique (170) comprenant le périphérique.

2. Véhicule aérien sans pilote (100) selon la revendication 1, dans lequel pour chacun de la pluralité d'ensembles hélice (120), la carte de circuit imprimé montée verticalement (135) ne coupe pas une projection, dans un troisième plan, d'une circonférence de rotation (124) de l'ensemble hélice (120), le troisième plan étant orthogonal à l'axe de rotation de l'ensemble hélice (120).

3. Véhicule aérien sans pilote (100) selon la revendication 1 ou la revendication 2, dans lequel au moins une portion de la carte de circuit imprimé montée verticalement (135) est exposée.

4. Véhicule aérien sans pilote (100) selon l'une quelconque des revendications 1 à 3, dans lequel la carte de circuit imprimé montée verticalement (135) a une forme non rectangulaire.

5. Véhicule aérien sans pilote (100) selon la revendication 4, dans lequel la forme non rectangulaire est une forme d'un animal.

6. Véhicule aérien sans pilote (100) selon la revendication 5, dans lequel l'animal est un requin.

7. Véhicule aérien sans pilote (100) selon l'une quelconque des revendications 1 à 6, dans lequel la pluralité d'ensembles hélice (120) comprend au moins quatre hélices.

8. Véhicule aérien sans pilote (100) selon la revendication 1, dans lequel la caractéristique mécanique est une découpe.

9. Véhicule aérien sans pilote (100) selon la revendication 8, comprenant en outre le périphérique (165), et dans lequel le périphérique (165) ou le sous-ensemble périphérique (170) est en prise coulissante dans la découpe.

10. Véhicule aérien sans pilote (100) selon la revendication 9, dans lequel le périphérique (165) est couplé électriquement à la carte de circuit imprimé montée verticalement (135).

11. Véhicule aérien sans pilote (100) selon la revendication 9 ou la revendication 10, dans lequel le périphérique (165) ou le sous-ensemble périphérique (170) est soudé à la carte de circuit imprimé montée verticalement (135).

12. Véhicule aérien sans pilote (100) selon l'une quelconque des revendications 7 à 11, dans lequel le périphérique (165) est une caméra.

13. Véhicule aérien sans pilote (100) selon la revendication 12, comprenant en outre une bague de protection couplée à la caméra.

14. Véhicule aérien sans pilote (100) selon l'une quelconque des revendications 1 à 13, dans lequel un poids du véhicule aérien sans pilote (100) est inférieur à 1 kg.
